(19) Europäisches Patentamt
European Patent Office
Office européen des brevets

(11) **EP 2 794 252 B1**

(12) **FASCICULE DE BREVET EUROPEEN**

(45) Date de publication et mention
de la délivrance du brevet:
**16.11.2016 Bulletin 2016/46**

(51) Int Cl.:
***B29D 30/46*** *(2006.01)*       ***B26D 3/14*** *(2006.01)*
***B26D 3/00*** *(2006.01)*       ***B26D 1/00*** *(2006.01)*
***B26F 1/38*** *(2006.01)*

(21) Numéro de dépôt: **12799191.7**

(22) Date de dépôt: **12.12.2012**

(86) Numéro de dépôt international:
**PCT/EP2012/075159**

(87) Numéro de publication internationale:
**WO 2013/092325 (27.06.2013 Gazette 2013/26)**

(54) **PROCEDE ET DISPOSITIF DE COUPE D'UNE NAPPE DE RENFORT EN POINTILLE**

VERFAHREN UND VORRICHTUNG ZUM PERFORIERTEN SCHNEIDEN EINER
VERSTÄRKUNGSLAGE

METHOD AND DEVICE FOR THE PERFORATED CUTTING OF A REINFORCING PLY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.12.2011 FR 1161907**

(43) Date de publication de la demande:
**29.10.2014 Bulletin 2014/44**

(73) Titulaires:
• **Compagnie Générale des Etablissements
Michelin
63000 Clermont-Ferrand (FR)**
• **Michelin Recherche et Technique S.A.
1763 Granges-Paccot (CH)**

(72) Inventeurs:
• **DUCROS, Thierry
F-63040 Clermont-Ferrand Cedex 9 (FR)**

• **RAVAT, Stéphane
F-63040 Clermont-Ferrand Cedex 9 (FR)**
• **DEBOEUF, Michel
F-63040 Clermont-Ferrand Cedex 9 (FR)**

(74) Mandataire: **Dequire, Philippe Jean-Marie Denis et
al
M.F.P. Michelin
DGD/LG/PI-F35-Ladoux
23, place des Carmes Déchaux
63040 Clermont-Ferrand Cedex 09 (FR)**

(56) Documents cités:
EP-A2- 0 447 273        WO-A1-2011/076558
DE-C- 840 497        GB-A- 482 754
GB-A- 1 305 829        GB-A- 1 535 689
JP-A- 2005 161 851

EP 2 794 252 B1

**Description**

L'invention concerne le domaine de la fabrication des pneumatiques, et plus particulièrement des nappes de renfort destinées à être employées dans la construction des pneumatiques. Ces nappes de renfort, destinées à la construction des pneumatiques, sont formées en règle générale de tronçons de fils enrobés dans du caoutchouc et formant un angle donné avec la direction longitudinale

Plus spécifiquement, l'invention s'intéresse à la découpe et au passage des nappes de renfort entre deux tapis de transfert.

La fabrication de ces nappes est largement connue de l'état de la technique et consiste à prélever, dans une nappe continue dans laquelle les fils sont parallèles à la direction longitudinale, dite nappe droit fil, des tronçons de nappes de largeur donnée selon un angle de coupe donné, et désignés ci-après sous le nom de laizes. Ces laizes sont mises bout à bout pour constituer une bande continue de renfort dans laquelle les tronçons de fil font un angle donné avec la direction longitudinale de la bande de renfort.

Dans une étape ultérieure du processus d'assemblage, on prélève dans la bande de renfort, des tronçons de nappe de renfort, encore appelés nappes de renfort. La longueur de ces nappes de renfort est ajustée avec précision en fonction de la circonférence de pose de ladite nappe de renfort sur le moyen d'assemblage.

La découpe de la nappe de renfort se fait en disposant la bande sur une enclume adaptée, et en faisant passer un couteau, généralement circulaire, entre deux fils de renfort (voir par exemple WO 2011 /076558 A1). A l'issu de cette opération, la nappe de renfort se présente sous la forme d'un parallélogramme dont les fronts avant et arrières font un angle donné α avec la direction longitudinale de la nappe de renfort.

La nappe de renfort est alors transférée depuis un tapis de coupe sur un tapis de pose aménagé pour recevoir la nappe en attente d'assemblage et approcher la nappe de la surface de réception au moment approprié du cycle d'assemblage.

Toutefois, on observe que les lignes formées par les fronts avant et arrière de la nappe de renfort ne demeurent pas rectilignes, et se déforment de manière non maitrisée sous l'effet des contraintes internes du produit. Il en résulte que, au moment de la pose de la nappe de renfort et de l'aboutage des fronts avant et arrière, il est souvent nécessaire de faire intervenir un opérateur pour aligner les fronts et éviter les superpositions ou les ouvertures de fils le long de la soudure bout à bout des deux fronts.

Aussi, pour permettre la pose de ces produits à l'aide de moyens automatiques ne faisant pas intervenir d'opérateurs humains, de nombreux dispositifs ont été proposés pour contenir les variations géométriques de ces produits dans les tolérances, toujours plus étroites, acceptables par les usagers des pneumatiques.

D'autres dispositifs de coupe sont décrits dans les demandes JP 2005161851 A, GB 1 305 829 A et GB 482,754 A.

L'invention a pour objet de proposer un procédé et un dispositif susceptibles de contribuer à améliorer l'efficacité globale d'un dispositif de coupe et de pose des nappes de renfort à angle.

En effet, il a été observé que la plupart des contraintes de déformation des fronts avant et arrière, naissent au moment de la coupe, lorsque le couteau passe entre les fils et tranche le pont de gomme disposé entre ces fils. De plus, le passage de la nappe de renfort sur l'enclume qui est disposée dans la plupart des installations en saillie au-dessus du tapis de coupe, a pour effet de mettre la nappe en tension et d'étirer anormalement les volumes placés entre deux fils, en particulier dans les zones proches des lisières de la nappe de renfort.

En raison de la plasticité des matériaux à base de caoutchouc, ces contraintes ont tendance à se résorber avec le temps, et disparaissent pratiquement au bout d'une dizaine de secondes.

Le procédé selon la revendication 1 met à profit cette observation et comprend les étapes au cours desquelles on prélève dans une bande de renfort des tronçons de nappe de longueur déterminée en sectionnant la gomme située entre deux fils adjacents de la dite bande, de manière à séparer le front arrière de la nappe, du front avant de la nappe de renfort suivante.

Ce procédé se caractérise en ce qu'on interrompt la coupe à intervalles prédéterminés pour laisser subsister des ponts de gomme entre les deux fronts de nappe.

Ces ponts de gomme sont suffisamment fragiles pour se rompre lorsqu'on exerce une légère traction sur la nappe de renfort. Il suffit alors de détacher le front arrière de la nappe à poser quelques instants après la coupe, idéalement juste avant la pose de la nappe sur la surface de réception, de manière à laisser les fronts se relaxer dans une position géométrique idéale, afin de réduire les déformations des fronts une fois les fonts libérés.

Préférentiellement, les fils de la nappe de renfort font un angle α avec la direction longitudinale compris entre 45° et 90°, de manière à ce que les contraintes exercées sur les fronts de gomme lorsqu'on tire sur les ponts de gomme pour les rompre ne provoquent pas d'autres déformations non désirées.

Idéalement, les ponts de gomme ont une longueur, mesurée le long d'un fil du front, comprise entre 0,5 mm et 2 mm.

Pour assurer un bon maintien des fronts, les ponts de gomme sont avantageusement espacés entre eux d'une longueur, mesurée le long d'un fil du front, comprise entre 1 cm et 15cm et préférentiellement comprise entre 2 et 10 cm.

Puis, on détache la nappe de renfort de la bande de renfort en étirant jusqu'à les rompre les ponts de gomme disposés entre le front arrière de la nappe de renfort et le front avant de la nappe de renfort suivante.

Pour que les effets de la stabilisation des fronts soient sensibles on sépare le front arrière de la nappe de renfort du front avant de la nappe suivante après un temps de relaxation donné qui est préférentiellement, selon les gommes de calandrage employées, au moins supérieur à dix secondes.

Préférentiellement, on détache une nappe de renfort de la bande de renfort pendant le cycle d'assemblage d'un pneumatique, lorsque le temps de cycle est supérieur au temps de relaxation minimum recherché.

L'invention concerne également une lame de coupe selon la revendication 8.

Préférentiellement, la lame de coupe est formée d'un disque dont la partie tranchante est sensiblement circulaire.

Pour assurer un espacement correct des ponts de gomme, les créneaux sont espacés circonférentiellement d'une longueur comprise entre 1 cm et 15 cm, et préférentiellement comprise entre 2 cm et 10 cm.

De même, les créneaux ont une largeur, mesurée dans le sens du fil de coupe, comprise entre 0,5 mm et 2 mm.

Enfin, l'invention concerne un dispositif de coupe d'une bande de renfort comprenant une lame de coupe selon l'invention, et un procédé dans lequel on réalise des nappes de renfort à l'aide dudit dispositif de coupe.

La description qui suit s'appuie sur les figures 1 à 6 dans lesquelles :

-     les figures 1 et 2 représentent une lame de coupe selon l'invention,
-     la figure 3 représente une nappe de renfort obtenue à l'aide d'un procédé selon l'invention,
-     les figures 4 à 6 représentent un exemple de mise en oeuvre du procédé selon l'invention.

L'obtention d'une nappe de renfort à partir d'une bande de renfort constituée de fils de renfort parallèles entre eux et enrobés dans un mélange de caoutchouc et faisant un angle $\alpha$ avec la direction longitudinale de la bande consiste, de manière connue, à faire rouler une lame de coupe circulaire entre deux fils juxtaposés l'un à l'autre en exerçant une pression maitrisée, de manière à sectionner l'épaisseur de gomme située entre ces deux fils de renfort. Pour faciliter cette opération la bande de gomme peut utilement être placée sur une enclume formant un angle identique avec la direction de progression du dispositif de coupe de manière à reprendre les efforts appliqués sur la lame.

Il est également possible de libérer le déplacement de la lame le long d'un axe parallèle à l'axe de rotation de la lame de manière à éviter de blesser les bords des fils de renfort lors du passage de la lame. De même, on choisira judicieusement le diamètre de la lame de coupe pour assurer le meilleur guidage de la lame par les deux fils adjacents bordant le front de coupe.

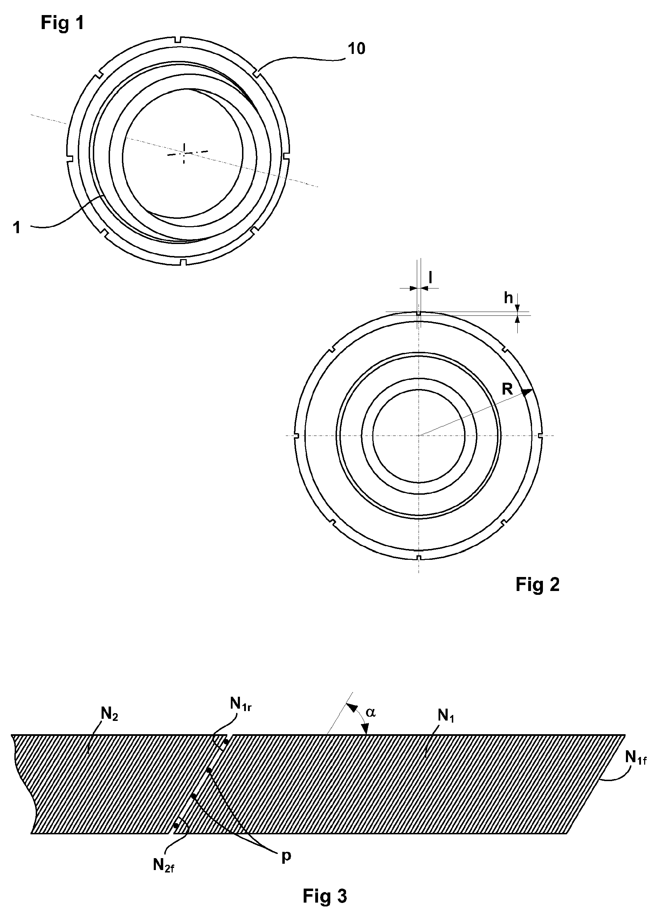

Les figures 1 et 2 représentent une lame de coupe selon l'invention formée d'un disque d'un de forme circulaire de rayon R, dont la partie tranchante est disposée sur la partie radialement extérieure du disque. On observe que cette lame de coupe comporte sur sa partie tranchante des créneaux 10 disposés à intervalles réguliers. Le fil de coupe de la lame est ainsi interrompu au niveau de chacun de ces créneaux.

Lors de la découpe d'une bande continue de la bande de renfort pour en extraire une nappe de renfort $N_1$, la lame tranche l'épaisseur de gomme disposée entre deux fils contigus à l'exception des parties situées au droit des créneaux 10 et laisse subsister des ponts de gomme p de faible largeur entre les deux fils de renfort, comme cela est illustré à la figure 3.

Il en résulte, toujours en référence à la figure 3, que le front arrière $N_{1r}$ de la nappe de renfort $N_1$ reste solidaire du front avant $N_{2f}$ de la bande de renfort ou de la nappe de renfort suivante $N_2$. De la sorte, les fronts des deux nappes, $N_{1r}$ et $N_{2f}$, sont maintenus l'un à l'autre par l'intermédiaire des ponts p, ce qui empêche ces fronts de se déformer pendant le temps de relaxation de la gomme fraichement sectionnée.

Ce temps de relaxation peut être très court, de l'ordre d'une dizaine de secondes, pour que l'effet sur la rectitude des fronts soit significatif. Mais on pourra avantageusement laisser les deux fronts solidaires l'un de l'autre un temps plus long en provoquant ce détachement le plus tard possible et à moment du cycle d'assemblage judicieusement choisi comme on le verra par la suite.

En exerçant une faible traction sur la nappe de renfort $N_1$, on provoque la rupture des ponts de gomme p et on détache alors la nappe de renfort de la bande de renfort en désolidarisant les fronts $N_{1r}$ et $N_{2f}$. On fera observer à ce stade que, lorsque l'angle $\alpha$ de la nappe avec la direction longitudinale est trop faible, il y a un risque d'étirement des pointes et de déformation des fronts pendant cette opération. Aussi, il semble préférable de limiter l'usage de ce procédé à des nappes de renfort dont les fils font un angle compris entre 45° et 90° avec la direction longitudinale.

Les créneaux sont disposés à des intervalles donnés sur la circonférence de la lame de coupe et leur espacement, détermine l'espacement entre deux ponts p. De préférence on dispose les créneaux de manière régulière pour assurer un écartement régulier entre les ponts de gomme, mais il est tout à fait possible de placer circonférentiellement les dits créneaux à des distances variables selon les effets de rigidité que l'on cherche à obtenir.

A titre d'exemple, pour une lame circulaire de 30 mm de rayon comprenant 8 créneaux équidistants, les ponts p sont espacés de $\dfrac{2\pi \times 30}{8}$, soit environ 23,5mm.

La profondeur h des créneaux doit être supérieure ou égale à l'épaisseur du volume de gomme compris entre deux fils de renfort, et qui peut varier de 1 mm à 5 mm voire 6 mm pour les nappes de renfort de forte épaisseur.

La largeur l des créneaux peut utilement être comprise entre 0,5mm et 2mm, mais sera d'autant plus importante que ledit volume de gomme sera épais.

Le procédé de réalisation de nappe de renfort selon l'invention est mis en oeuvre de manière préférentielle à l'aide d'une lame de coupe telle que décrite dans les paragraphes qui précèdent. Mais il est tout à fait possible d'obtenir un résultat similaire à l'aide de moyens manuels tels qu'un couteau plongeant que l'on introduit entre les fils à espace régulier ou tout autre moyen similaire.

Ce qui suit a pour objet de décrire un exemple particulièrement intéressant de mise en oeuvre du procédé et d'un dispositif selon l'invention, appliqué au cas des nappes de renfort comportant des fils métalliques.

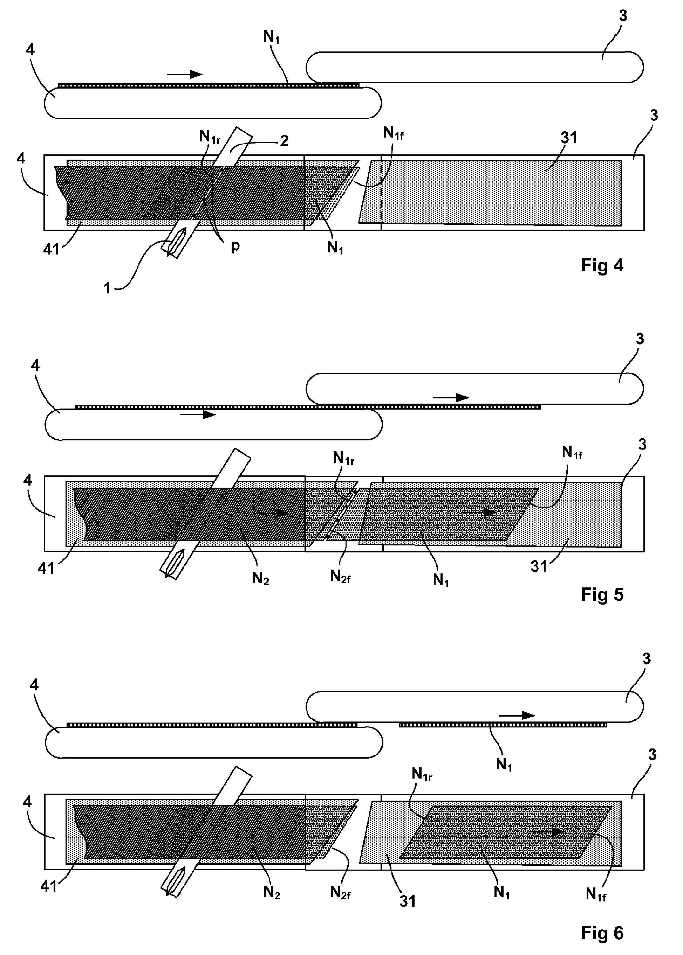

L'installation complète servant à la mise en oeuvre du procédé peut comprendre un tapis de coupe 4 comportant une zone aimantée 41 destinée à maintenir fortement en application la bande ou la nappe sur la surface supérieure du tapis de coupe, comme cela est représenté à la figure 4.

Une enclume orientable 2 faisant un angle $\alpha$ avec la direction longitudinale du tapis de pose est disposée entre la surface supérieure du tapis de coupe 4 et la bande $N_2$. Un dispositif de coupe comprenant une lame de coupe 1 selon l'invention coopère avec ladite enclume 2.

Un tapis de pose 3, comportant également une zone aimantée 31 destinée à maintenir la nappe de renfort fermement appliquée contre la face inférieure dudit tapis, est placée en aval du premier tapis de coupe. Le tapis de pose est en règle générale placé directement au droit de la surface de réception (non représentée) sur laquelle sont assemblés les composants formant le pneumatique.

La partie aval du tapis de coupe 4, et la partie amont du tapis de pose 3, se superposent sur une longueur donnée, de sorte que les faces aimantées de chacun des tapis soient en vis-à-vis sans se superposer elles-mêmes. Il en résulte une zone libre d'influence des zones aimantées, et correspondante à la zone de transfert de la nappe de renfort du tapis de coupe vers le tapis de pose.

La nappe de renfort peut ainsi circuler depuis la face supérieure du tapis de coupe 4 vers la face inférieure du tapis de pose 3.

Pour plus d'informations concernant ce type d'installation de coupe et de transfert, on pourra se référer utilement à la publication PCT/EP2009/063320 qui décrit une installation similaire.

La bande de renfort $N_2$ est disposée sur le tapis de coupe et circule, sous l'effet de l'avance du tapis, de l'amont vers l'aval de l'installation en direction de la flèche. Des moyens (non représentés) permettent de mesurer la longueur de la bande comprise entre le front avant $N_{2f}$ et l'enclume, et commandent l'arrêt du tapis de coupe lorsque la longueur désirée, correspondant à la longueur de pose de la nappe, est atteinte.

On actionne alors la lame de coupe 1 du type selon l'invention, et qui circule le long de l'enclume 2 entre deux fils de renfort, de manière à sectionner l'épaisseur de gomme comprise entre les deux fils. Les ponts p empêchent le front arrière $N_{1r}$ de la nappe $N_1$ de se détacher du front avant $N_{2f}$ de la nappe suivante $N_2$.

On fait alors progresser la nappe $N_1$ le long du tapis de coupe 4 jusqu'à ce que le front avant $N_{1f}$ de la nappe soit disposé au droit de la partie aval du tapis de pose 3. Et on fait passer la nappe $N_1$ du tapis de coupe 4 sous le tapis de pose 3 jusqu'à ce que le front arrière $N_{1r}$ de la nappe $N_1$, toujours solidaire du front avant $N_{2f}$ de la nappe $N_2$, soit au droit du tapis de pose 3 comme cela est représenté à la figure 5.

Le dispositif de coupe et le tapis de pose restent alors en attente de la commande de transfert de la nappe de renfort $N_1$ depuis le tapis de pose 3 sur la surface de réception servant à l'assemblage des composants du pneumatique.

Lorsque la commande est donnée, et en référence à la figure 6, on active alors l'avance du seul tapis de pose 3, ce qui a pour effet de provoquer la rupture des ponts de gomme p et de diriger la nappe de renfort en direction de la surface de réception.

On observera que pendant la durée du cycle comprise entre la coupe et la commande de transfert de la nappe $N_1$ sur la surface de réception, le front arrière $N_{1r}$ de la nappe $N_1$ est maintenu dans sa position angulaire par les ponts de gomme p. Cette durée est en règle générale supérieure à une dizaine de secondes et suffisante pour permettre aux contraintes générées par l'opération de coupe de se dissiper. Il en résulte que la libération du front arrière $N_{1f}$ de la nappe $N_1$ n'engendre pas de perturbation susceptibles de modifier la géométrie du font pendant son passage dans la zone exempte d'aimantation depuis le tapis de coupe 4 vers le tapis de pose 3.

De même, lorsqu'après avoir posé la nappe $N_1$ et libéré le tapis de pose 3, on fait passer le front avant $N_{2f}$ de la nappe $N_2$ du tapis de coupe 4 vers le tapis de pose 3, ce front est suffisamment stabilisé pour ne pas avoir à souffrir lui aussi, de déformations non désirées.

La mise en oeuvre du procédé et d'une lame de coupe selon l'invention permet ainsi de réduire les effets engendrés au moment de la coupe en stabilisant les fronts de nappe dans une position géométrique correcte, de manière à ce que, lorsque ces fronts franchissent la zone libre d'aimantation en passant du tapis de coupe 4 vers le tapis de pose 3, les contraintes internes ne provoquent aucune déformation géométrique des fronts.

Il apparaît également, que le fait de maintenir pendant la coupe une liaison entre les fronts de deux nappes successives permet de réduire le déplacement latéral des laizes, engendré par la composante transversale du déplacement de la lame de coupe.

Le procédé et le dispositif décrits ci-dessus ont pour but de montrer l'intérêt de la mise en oeuvre d'une lame de coupe et d'un procédé selon l'invention et n'ont pas de caractère limitatif.

Ainsi, on peut également imaginer de réaliser la coupe à longueur des nappes de renfort au niveau du dispositif de fabrication de la bande de renfort à partir de la nappe dite droit fil.

La bande de renfort de renfort continue est alors composée d'une pluralité de nappe de renfort liées les unes aux autres par l'intermédiaire des ponts de gomme.

Lors de l'opération d'assemblage du pneumatique on prélève sans avoir besoin de les couper, la nappe de renfort de la bande de renfort en détachant les ponts de gomme. Ce dernier mode opératoire peut s'avérer utile lorsque les nappes de renfort sont formées à partir de fils non métalliques.

## Revendications

1. Procédé de réalisation d'une nappe de renfort destinée à la fabrication d'un pneumatique, ladite nappe étant formée de fils de renfort enrobés dans un mélange de caoutchouc, parallèles entre eux et faisant un angle donné ($\alpha$) avec la direction longitudinale de la nappe, au cours duquel on prélève dans une bande de renfort des tronçons de nappe ($N_1$) de longueur déterminée en sectionnant la gomme située entre deux fils adjacents de la dite bande, de manière à séparer le front arrière ($N_{1r}$) de la nappe ($N_1$), du front avant ($N_{2f}$) de la nappe de renfort suivante ($N_2$), **le procédé étant caractérisé en ce qu'**on interrompt la coupe à intervalles prédéterminés pour laisser subsister des ponts (p) de gomme entre les deux fronts de nappe ($N_{1r}$, $N_{2f}$).

2. Procédé selon la revendication 1, dans lequel les fils de la nappe de renfort font un angle ($\alpha$) avec la direction longitudinale compris entre 45° et 90°.

3. Procédé selon l'une des revendications 1 ou 2, dans lequel les ponts de gomme (p) ont une longueur, mesurée le long d'un fil du front, comprise entre 0,5mm et 2mm.

4. Procédé selon l'une des revendications 1 à 3, dans lequel les ponts de gomme (p) sont espacés entre eux d'une longueur, mesurée le long d'un fil du front, comprise entre 1 cm et 15cm et préférentiellement comprise entre 2 et 10 cm.

5. Procédé selon l'une des revendications 1 à 4, au cours duquel on détache la nappe de renfort de la bande de renfort en étirant jusqu'à les rompre les ponts de gomme (p) disposés entre le front arrière ($N_{2r}$) de la nappe de renfort ($N_1$) et le front avant ($N_{2f}$) de la nappe de renfort suivante ($N_2$).

6. Procédé selon la revendication 5, dans lequel on sépare le front arrière ($N_{2r}$) de la nappe de renfort ($N_1$) du front avant ($N_{2f}$) de la nappe de renfort suivante ($N_2$) après un temps de relaxation donné.

7. Procédé selon la revendication 6, dans lequel le temps de relaxation est au moins supérieur à dix secondes.

8. Dispositif de coupe d'une bande de renfort comprenant une lame de coupe (1), la partie tranchante de la lame comprenant un ou plusieurs créneaux (10) disposés à intervalles donnés, **le dispositif de coupe étant caractérisé en ce que** les créneaux (10) ont une largeur, mesurée dans le sens du fil de coupe, comprise entre 0,5 mm et 2 mm.

9. Dispositif de coupe selon la revendication 8, dans lequel la lame de coupe est formée d'un disque dont la forme de la partie tranchante est sensiblement circulaire.

10. Dispositif de coupe selon la revendication 9, dans lequel les créneaux (10) sont espacés circonférentiellement d'une longueur comprise entre 1 cm et 15 cm, et préférentiellement comprise entre 2 cm et 10 cm.

## Patentansprüche

1. Herstellungsverfahren einer Verstärkungseinlage, die zur Produktion eines Luftreifens bestimmt ist, wobei die Einlage aus Verstärkungsfasern ausgebildet ist, die mit einer Kautschukmischung ummantelt sind, untereinander parallel verlaufen und einen gegebenen Winkel ($\alpha$) mit der Längsrichtung der Einlage bilden, wobei im Verlauf des Verfahrens ein Verstärkungsstreifen der Einlagenabschnitte ($N_1$) bestimmter Länge entnommen wird, indem das Gummi, das zwischen zwei benachbarten Fasern des Streifens liegt, dergestalt geschnitten wird, dass die hintere Front ($N_{1r}$) der Einlage ($N_1$) von der vorderen Front ($N_{2f}$) der nachfolgenden Verstärkungseinlage ($N_2$) abgetrennt wird, wobei das Verfahren **dadurch gekennzeichnet ist, dass** der Schnitt in zuvor bestimmten Abständen unterbrochen wird, um Brücken (p) aus Gummi zwischen den beiden Einlagenfronten ($N_{1r}$, $N_{2f}$) stehen zu lassen.

2. Verfahren nach Anspruch 1, wobei die Fasern der Verstärkungseinlage einen Winkel ($\alpha$) mit der Längsrichtung bilden, der zwischen 45° und 90° beträgt.

3. Verfahren nach einem der Ansprüche 1 oder 2, wobei die Gummibrücken (p) eine Länge haben, die entlang einer Faser der Front gemessen zwischen 0,5 mm und 2 mm beträgt.

**4.** Verfahren nach einem der Ansprüche 1 bis 3, wobei die Gummibrücken (p) untereinander mit einer Länge beabstandet sind, die entlang einer Faser der Front gemessen zwischen 1 cm und 15 cm beträgt und vorzugsweise zwischen 2 und 10 cm beträgt.

**5.** Verfahren nach einem der Ansprüche 1 bis 4, im Verlauf dessen die Verstärkungseinlage von dem Verstärkungsstreifen durch Ziehen entfernt wird, bis die Gummibrücken (p) brechen, die zwischen der hinteren Front ($N_{2r}$) der Verstärkungseinlage ($N_1$) und der vorderen Front ($N_{2f}$) der nachfolgenden Verstärkungseinlage ($N_2$) angeordnet sind.

**6.** Verfahren nach Anspruch 5, wobei die hintere Front ($N_{2r}$) der Verstärkungseinlage ($N_1$) von der vorderen Front ($N_{2f}$) der nachfolgenden Verstärkungseinlage ($N_2$) nach einer gegebenen Relaxationszeit abgetrennt wird.

**7.** Verfahren nach Anspruch 6, wobei die Relaxationszeit mindestens länger als zehn Sekunden dauert.

**8.** Schneidevorrichtung eines Verstärkungsstreifens, die eine Schneideklinge (1) umfasst, wobei der schneidende Bereich der Klinge einen oder mehrere Schlitze (10) umfasst, die in gegebenen Abständen angeordnet sind, wobei die Schneidevorrichtung **dadurch gekennzeichnet ist, dass** die Schlitze (10) eine Breite aufweisen, die in Richtung der Schneidefaser gemessen zwischen 0,5 mm und 2 mm beträgt.

**9.** Schneidevorrichtung nach Anspruch 8, wobei die Schneideklinge aus einer Scheibe ausgebildet ist, wobei die Form des schneidenden Bereichs im Wesentlichen kreisförmig ist.

**10.** Schneidevorrichtung nach Anspruch 9, wobei die Schlitze (10) kreisförmig über eine Länge beabstandet sind, die zwischen 1 cm und 15 cm beträgt, und vorzugsweise zwischen 2 cm und 10 cm beträgt.

## Claims

**1.** Method for producing a reinforcing ply intended for the manufacture of a tyre, said ply being formed by reinforcing threads that are coated in a rubber mixture, are parallel to one another and form a given angle ($\alpha$) with the longitudinal direction of the ply, during which portions of ply ($N_1$) of a given length are removed from a reinforcing strip by cutting through the rubber located between two adjacent threads of said strip, so as to separate the rear edge ($N_{1r}$) of the ply ($N_1$) from the front edge ($N_{2f}$) of the following reinforcing ply ($N_2$), **characterized in that** the cut is interrupted at predetermined intervals in order to leave bridges (p) of rubber between the two ply edges ($N_{1r}$, $N_{2f}$).

**2.** Method according to Claim 1, wherein the threads of the reinforcing ply form an angle ($\alpha$) of between 45° and 90° with the longitudinal direction.

**3.** Method according to either of Claims 1 and 2, wherein the bridges of rubber (p) have a length, measured along a thread of the edge, of between 0.5 mm and 2 mm.

**4.** Method according to one of Claims 1 to 3, wherein the bridges of rubber (p) are spaced apart by a length, measured along a thread of the edge, of between 1 cm and 15 cm, and preferably between 2 and 10 cm.

**5.** Method according to one of Claims 1 to 4, during which the reinforcing ply is detached from the reinforcing strip by stretching the bridges of rubber (p) located between the rear edge ($N_{2r}$) of the reinforcing ply ($N_1$) and the front edge ($N_{2f}$) of the following reinforcing ply ($N_2$) until said bridges of rubber (p) break.

**6.** Method according to Claim 5, wherein the rear edge ($N_{2r}$) of the reinforcing ply ($N_1$) is separated from the front edge ($N_{2f}$) of the following reinforcing ply ($N_2$) after a given relaxation time.

**7.** Method according to Claim 6, wherein the relaxation time is at least greater than ten seconds.

**8.** Cutting device for cutting a reinforcing strip, comprising a cutting blade (1), the cutting part of the blade comprising one or more notches (10) disposed at given intervals, **characterized in that** the notches (10) have a width, measured in the direction of the cutting wire, of between 0.5 mm and 2 mm.

**9.** Cutting device according to Claim 8, wherein the cutting blade is formed by a disc, the shape of the cutting part of which is approximately circular.

**10.** Cutting device according to Claim 9, wherein the notches (10) are spaced apart circumferentially by a length of between 1 cm and 15 cm, and preferably between 2 cm and 10 cm.

**Fig 1**

10

1

l

h

R

**Fig 2**

$N_2$

$N_{1r}$

α

$N_1$

$N_{1f}$

$N_{2f}$

p

**Fig 3**

Fig 4

Fig 5

Fig 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011076558 A1
- JP 2005161851 A
- GB 1305829 A
- GB 482754 A
- EP 2009063320 W